# EUROPEAN PATENT APPLICATION

(11) **EP 2 091 134 A2**
(43) Date of publication of application: **19.08.2009**
(21) Application number: 09001696.5
(22) Date of filing: 06.02.2009
(51) Int. Cl.: H02K 5/167, H02K 9/00

(54) **Bearing structure**

(30) Priority: 15.02.2008 JP 2008034254
(71) Applicant: Calsonic Kansei Corporation, Saitama 331-8501 (JP)
(72) Inventor: Sano, Narihito, Saitama-shi Saitama 331-8501 (JP); Ohira, Shigenori, Saitama-shi Saitama 331-8501 (JP); Yamada, Kazunori, Saitama-shi Saitama 331-8501 (JP); Kawarai, Hiromi, Saitama-shi Saitama 331-8501 (JP); Kawachi, Katsuyoshi, Saitama-shi Saitama 331-8501 (JP)
(74) Representative: Grünecker, Kinkeldey, Stockmair & Schwanhäusser Anwaltssozietät

(57) **Abstract**

A bearing structure includes a housing having a bore that penetrates the housing, a rotation shaft inserted into the bore, an annular first metal bearing and an annular second metal bearing, which are provided apart from each other in an axial direction in the bore and rotatably support the rotation shaft, and a ventilation passage provided in the housing. The ventilation passage is formed on the housing-side contact surfaces which are formed on an inner surface of the housing, and bypasses at least one of the first metal bearing and the second metal bearing.

Through ventilation passage, a closed area sandwiched between the both first metal bearing and second metal bearing inside the bore communicates with an outside area.

## Description

### BACKGROUND OF THE INVENTION

The present invention relates to a bearing structure employing a metal bearing which is used in rotating machinery such as a motor.

A bearing structure, in which a pair of metal bearings are provided apart from each other in an axial direction of a rotating shaft and support the rotating shaft, has been known. In a case of such bearing structure, there is a problem producing an ill effect such as an increase in mechanical resistance, caused by heat generation when the shaft rotates, and an increase in noise. For this problem, for instance, Published utility model application Nos. JP,59-185962, U(1984) and JP,60-192654, U(1985) disclose techniques, in which ventilation passages or grooves (channels) are formed at an outer or an inner periphery of the metal bearing and cooling air is provided between the both metal bearings, to resolve the problem caused by the heat generation.

### SUMMARY OF THE INVENTION

In the above related art techniques disclosed in JP,59-185962 and JP,60-192654, however, the ventilation passages or grooves are directly formed at the outer or inner periphery of the metal bearing. For this reason, it is difficult to firmly secure or fix a miniature metal bearing to a casing or a housing. In addition, projections and depressions (i.e. asperity) appear on a bearing surface depending on processing accuracy, and this might result in deterioration of bearing performance. Furthermore, as shown in JP,59-185962, in a case where the outer periphery of the metal bearing is formed in a spherical shape to allow a shaft-center-adjustment function, if the asperity appears on the bearing surface by forming the ventilation passages at the outer periphery of the metal bearing, there is a possibility that the shaft-center-adjustment function will not function adequately.

Moreover, in the case where the ventilation passages or grooves are formed in the metal bearing, a surface area of the metal bearing is increased, while a volume of the metal bearing is decreased. Therefore, due to the increase of the surface area, in a case where the metal bearing is a bearing that is impregnated with a lubricant, an outflow quantity of the lubricant impregnated in the metal bearing rises when the metal bearing is heated, and this causes deterioration in lubricating performance. On the other hand, due to the decrease of the volume of the metal bearing, an impregnation quantity of the lubricant that is impregnated in the entire metal bearing lowers, and this may cause deterioration in lubricating performance as well.

In addition, in a case where a ring-shaped movement restriction member that serves for positioning in an axial direction is provided, if the ventilation passages are formed in the metal bearing, a contact state of the metal bearing with the movement restriction member is not constant throughout the circumference of metal bearing, namely that the metal bearing does not uniformly contact or touch the movement restriction member throughout the circumference of metal bearing. As a consequence, when the metal bearing slides for performing the shaft-center-adjustment, a smooth sliding movement of the metal bearing is not achieved, and there is a risk that desired shaft-center-adjustment performance will not be obtained.

It is therefore an object of the present invention to provide a bearing structure which is capable of improving the bearing performance, stabilizing the shaft-center-adjustment performance, and improving the lubricating performance.

According to one aspect of the present invention, a bearing structure comprises: a housing having a bore that penetrates the housing; a rotation shaft inserted into the bore; annular first and second metal bearings which are provided apart from each other in an axial direction in the bore and rotatably support the rotation shaft; and a ventilation passage which is provided in the housing and bypasses at least one of the first and second metal bearings, and through which a closed area sandwiched between the both first and second metal bearings inside the bore communicates with an outside area.

According to another aspect of the present invention, a bearing structure further comprises: spherical-shaped housing-side contact surfaces formed on an inner surface of the housing; and spherical-shaped bearing-side contact surfaces respectively formed on outer periphery surfaces of the first and second metal bearings for allowing a sliding contact with the housing-side contact surfaces, and wherein a shaft-center-adjustment function is provided through the relative sliding contact between the bearing-side contact surfaces and the housing-side contact surfaces, and the ventilation passage has a groove shape, and is formed on the housing-side contact surfaces.

According to a further aspect of the invention, the first and second metal bearings are impregnated with a lubricant.

According to a still further aspect of the invention, ring-shaped movement restriction members which restricts movement in the axial direction, of the first and second metal bearings are provided in either the housing or the rotation shaft.

The other objects and features of this invention will become understood from the following description with reference to the accompanying drawings.

### BRIEF DESCRIPTION OF THE DRAWINGS

FIG. 1 is a sectional view of a principal part of a an electric fan unit F, employing a bearing structure of an embodiment 1 of the present invention.

FIG. 2 is a perspective exploded view of the principal part of the bearing structure of the embodiment 1.

### DETAILED DESCRIPTION OF THE INVENTION

According to the present invention, a closed area sandwiched between a pair of first and second metal bearings inside a bore communicates with an outside area through a ventilation passage that is formed in a housing. Therefore, in a case where a temperature increases due to rotation of a rotation shaft, an increase in an internal pressure of the closed area sandwiched between the both metal bearings can be prevented, and the temperature increase can be suppressed.

According to the present invention, since a groove is not formed in a portion of the metal bearing where the rotation shaft is supported, a good bearing performance is obtained as compared with a bearing structure in which the groove is formed in the metal bearing. Furthermore, in manufacturing, cutting process is performed with the housing, which is bigger than the metal bearing, held steady, when forming the ventilation passage. In this case, the housing can be held steadier as compared with a holding of the metal bearing. Thus, this provides a good cutting performance or machinability, and a high-precision working is readily achieved. Hence, even when the ventilation passage is formed on a spherical-shaped surface in the housing, the spherical shape of the surface can be kept, and the shaft-center-adjustment function through the spherical-shaped surface can be improved and function adequately.

In addition, according to the present invention, since the ventilation passage is formed in the housing, an increase in surface area and a decrease in volume of the metal bearing can be avoided. Consequently, in a case where the a metal bearing that is impregnated with lubricant is used for the both metal bearings, deterioration in lubricating performance, caused by these surface area increase and volume decrease, can be prevented.

According to the present invention, the groove is formed on a housing-side contact surface as the ventilation passage, by the surface-cutting of the housing. Because of this, as compared with a case where a through hole, as the ventilation passage, is formed in the housing (i.e. in a wall of the housing), workability is improved.

According to the present invention, a contact state of the metal bearing with a movement restriction spring, which restricts a movement of the metal bearing, is constant throughout a circumference of the metal bearing. This thus provides improvement in bearing performance and shaft-center-adjustment performance.

Embodiments of the present invention will now be explained below with reference to the drawings.

### [Embodiment 1]

An electric fan unit employing a bearing structure of the present invention, has a housing (2) having a bore (21) that penetrates the housing (2); a rotation shaft (1) inserted into the bore (21); annular first and second metal bearings (5, 6) which are provided apart from each other in an axial direction in the bore (21) and rotatably support the rotation shaft (1); and a ventilation passage (26) which is provided in the housing (2) and bypasses at least one of the first and second metal bearings (5, 6), and through which a closed area sandwiched between the both first and second metal bearings (5, 6) inside the bore (21) communicates with an outside area.

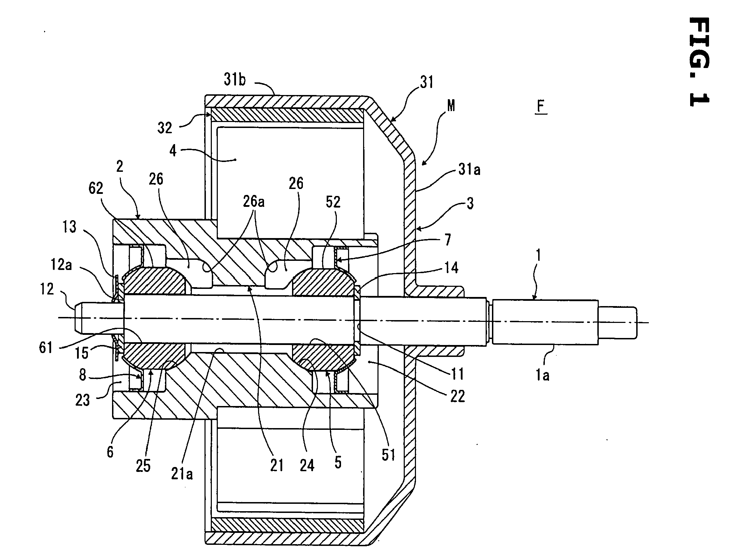

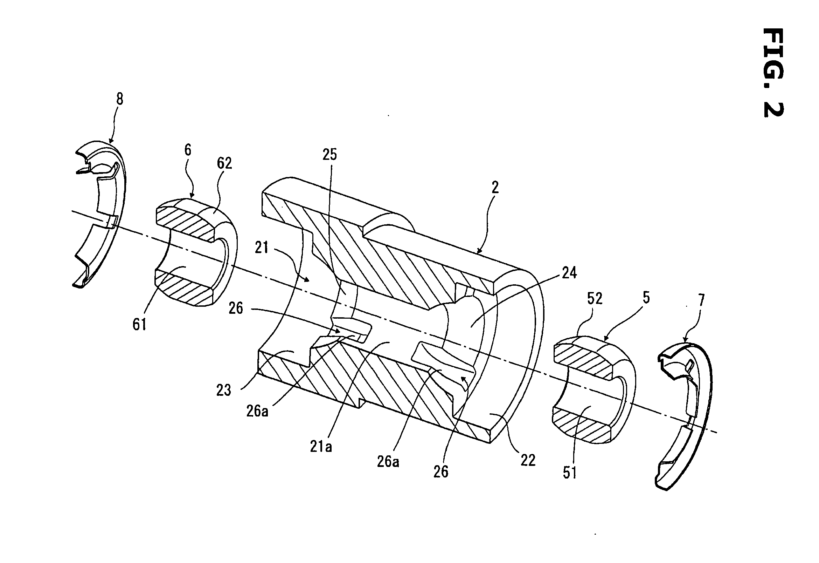

More specifically, as shown in Figs. 1 and 2, the bearing structure of the embodiment 1 is applied to a motor M of the electric fan unit F, and the electric fan unit F includes the motor M that rotates a fan (not shown). The motor M has a rotation shaft 1, a housing 2, a rotor 3, a stator 4, a first metal bearing 5, a second metal bearing 6, a first movement restriction spring (movement restriction member) 7, and a second restriction spring (movement restriction member) 8.

The rotation shaft 1 is provided with a top end portion 1a, and the fan is connected with the top end portion 1a. The rotation of the rotation shaft 1 is then transmitted to the fan. As shown in Fig. 1, the rotation shaft 1 is inserted into a penetration hole (or a through hole, or simply, a bore) 21 that penetrates the housing 2, and is rotatably supported by the housing 2 via the both metal bearings 5, 6.

The rotor 3 is fixedly connected with the rotation shaft 1, and rotates integrally with the rotation shaft 1. The rotor 3 has a yoke portion 31 and a permanent magnet 32.
The yoke portion 31 has a substantially disc-shaped supporting plate portion 31a that is connected with the rotation shaft 1, and a cylindrical-shaped portion 31b which is integrally formed with an outer periphery portion of the supporting plate portion 31a and is coaxially aligned with the rotation shaft 1. As for the permanent magnet 32, a plurality of the permanent magnets 32 are set in a circumferential direction on an inner side surface of the cylindrical-shaped portion 31b.

The stator 4 is installed inside the permanent magnet 32 via a clearance, and is supported by the housing 2. More specifically, the stator 4 has a plurality of electromagnets (not shown) in the circumferential direction, and by changing a magnetic field of the electromagnet and producing attraction and repulsion forces through the permanent magnet 32, the stator 4 rotates the rotor 3.

As mentioned above, the housing 2 is the housing that supports the rotation shaft 1 and the stator 4. And as shown in Fig. 2, the housing 2 is substantially cylindrical in shape to allow the insertion of the rotation shaft 1 into a shaft center of the bore 21.
Furthermore, the housing 2 is provided with bearing supporting portions 22 and 23 at both ends in an axial direction, of a normal portion 21a of the bore 21. These bearing supporting portions 22 and 23 are formed such that their diameters are greater than a constant inside diameter of the normal portion 21a situated in the middle in the axial direction of the bore 21. And as can be seen from the drawings, the bearing supporting portions 22, 23 and the normal portion 21a are coaxially aligned with each other.

At both opening end portions of the normal portion 21a, namely at boundaries between the bearing supporting portions 22, 23 and the normal portion 21a, a spherical-shaped first housing-side contact surface 24 and a spherical-shaped second housing-side contact surface 25 are respectively formed. The first housing-side contact surface 24 supports the first metal bearing 5, and the second housing-side contact surface 25 supports the second metal bearing 6.

The first metal bearing 5 and the second metal bearing 6 are respectively formed in a substantially annular shape. Furthermore, on the respective inner circumference sides, the first and second metal bearings 5 and 6 are provided with bearing holes 51 and 61 respectively, which penetrate the first and second metal bearings 5 and 6 respectively and rotatably support the rotation shaft 1 with the rotation shaft 1 inserted into the bearing holes 51 and 61. On the other hand, on the respective outer circumference sides, the first and second metal bearings 5 and 6 are provided with bearing-side contact surfaces 52 and 62 respectively. These bearing-side contact surfaces 52 and 62 are formed in a spherical shape so as to slide in contact with the first and second housing-side contact surfaces 24 and 25 respectively. With this sliding contact, a shaft-center-adjustment function can be achieved.
Here, in the embodiment 1, each of the first and second metal bearings 5 and 6 is impregnated with lubricating oil.

With respect to the first movement restriction spring 7 and the second restriction spring 8, these are made of thin plate metal (or sheet metal), and are formed in a ring shape, and further have a substantially depression or recession shape in cross section. The first movement restriction spring 7 keeps a position of the first metal bearing 5 in the axial direction with respect to the housing 2 at a position where the first metal bearing 5 is pressed or pushed against the first housing-side contact surface 24. Likewise, the second restriction spring 8 keeps a position of the second metal bearing 6 in the axial direction with respect to the housing 2 at a position where the second metal bearing 6 is pressed or pushed against the second housing-side contact surface 25.

The first and second movement restriction springs 7 and 8 will be explained in more detail. As shown in the drawings, an outer circumference side of the first movement restriction spring 7 is fitted into the bearing supporting portion 22, a position of the first movement restriction spring 7 is then fixed, while an inner circumference side of the first movement restriction spring 7 touches the bearing-side contact surface 52 of the first metal bearing 5. With this installation, while the movement of the first metal bearing 5 in the axial direction is being restricted, the sliding movement or the rotation of the first metal bearing 5 along the bearing-side contact surface 52 is permitted.

Likewise, as for the second restriction spring 8, an outer circumference side of the second restriction spring 8 is fitted into the bearing supporting portion 23, a position of the second restriction spring 8 is then fixed, while an inner circumference side of the second restriction spring 8 touches the bearing-side contact surface 62 of the second metal bearing 6. With this installation, while the movement of the second metal bearing 6 in the axial direction is being restricted, the sliding movement or the rotation of the second metal bearing 6 along the bearing-side contact surface 62 is permitted.

Here, a relative position of the rotation shaft 1 to the both first and second metal bearings 5 and 6 in the axial direction is restricted by ring members 14 and 15 which are provided at the rotation shaft 1. The ring member 14 is engaged with an engagement groove 11 that is formed in a recession shape throughout an outer circumference of the rotation shaft 1, then a movement of the ring member 14 in the axial direction is restricted. On the other hand, with regard to the ring member 15, it is provided at a small diameter portion 12 that is formed at a base end of the rotation shaft 1, and is sandwiched between a pressing member 13 provided at the small diameter portion 12 and a stepped portion 12a formed at the small diameter portion 12 by a difference of the diameter of the small diameter portion 12. The ring member 15 is then fixed to the rotation shaft 1 through a nut etc..

As can be seen in Figs. 1 and 2, ventilation grooves (ventilation passages) 26, 26 are formed on the first housing-side contact surface 24 and the second housing-side contact surface 25 in the axial direction. These ventilation grooves 26, 26 bypass or detour the first metal bearing 5 and the second metal bearing 6 respectively, and communicate with the inside of the normal portion 21a of the bore 21 and also communicate with the outside of the normal portion 21a. That is, an area or space (i.e. the inside of the normal portion 21a) sandwiched between the both first and second metal bearings 5 and 6 inside the bore 21 communicates with an outside area or space on both sides of the normal portion 21a through the ventilation grooves 26, 26.
A bottom surface 26a, which is a surface of a direction of depth of the groove, is shaped like a letter "J", and the ventilation groove 26 is formed so that a depth on a normal portion 21a side is greater than those of bearing supporting portion 22, 23 sides (in other words, so that the groove on the normal portion 21a side is deeper than those on the bearing supporting portion 22, 23 sides).

Next, the working of the bearing structure of the embodiment 1 will be explained.
In manufacturing, when forming the ventilation grooves 26, 26 in the housing 2, cutting process is performed with the housing 2 secured (with the housing 2 held steady) through fixing instruments (not shown).
In this case, the large and cylindrical housing 2 can be held steadier as compared with a holding of the spherical-shaped metal bearing 5 or 6.
Hence, when forming the ventilation grooves 26, 26 on the first and second housing-side contact surfaces 24 and 25, the cutting process can be performed with high accuracy as compared with a case where the ventilation grooves are formed on the bearing-side contact surfaces 52 and 62 of the first and second metal bearings 5 and 6. Therefore, the spherical shape of the first and second housing-side contact surfaces 24 and 25 can be kept, and the smooth sliding movement of the metal bearing can be achieved.

Next, when driving the motor M, a temperature increases due to a rotational resistance of the rotation shaft 1 or heat produced at an energized part such as the electromagnet. Then when the air inside the housing 2 is inflated due to this temperature increase and an internal pressure of the normal portion 21a of the bore 21, which is closed with the both first and second metal bearings 5 and 6, increases, the air inside the normal portion 21a flows to the outside of the normal portion 21a through the ventilation grooves 26, 26. The air inside and outside the normal portion 21a therefore interchange at this time.
With this mechanism, it is possible to suppress the increase in the internal pressure of the normal portion 21a of the bore 21 and the increase in temperature. Consequently, breakage of the first and second metal bearings 5, 6 and the first and second movement restriction springs 7, 8, caused by the internal pressure increase, can be prevented, and outflow of the lubricating oil impregnated in the first and second metal bearings 5, 6, caused by the temperature increase, can be prevented.

As explained above, the bearing structure of the embodiment 1 provides the following effects.
(a) The internal pressure increase of the inside of the bore 21, which is closed with the first and second metal bearings 5 and 6, can be prevented, and also the temperature increase can be suppressed, in the housing 2. Thus, the breakage caused by the internal pressure increase can be avoided, and the outflow of circulating oil (the lubricating oil) caused by the temperature increase can be avoided.
(b) Unlike the structure in which the ventilation grooves are formed in the bearing holes 51 and 61 of the first and second metal bearings 5 and 6, since the ventilation grooves 26, 26 are formed in the housing 2, there is no adverse effect on the bearing performance of the rotation shaft 1. Further, unlike the structure in which the ventilation grooves are formed on the bearing-side contact surfaces 52 and 62 of the first and second metal bearings 5 and 6, there is no risk that the spherical shape of the metal bering will be impaired, and therefore the shaft-center-adjustment function is improved.
(c) Since the ventilation grooves 26, 26 are not formed in the inner or outer circumference sides of the first and second metal bearings 5 and 6 but formed in the housing 2, the respective contact state of the first and second metal bearings 5 and 6 with the first and second movement restriction springs 7 and 8 become constant throughout the circumference of the metal bearing. As a consequence, positioning performance and the shaft-center-adjustment performance can be stabilized.
(d) Since the ventilation grooves 26, 26 are not formed in the inner or outer circumference sides of the first and second metal bearings 5 and 6 but formed in the housing 2, the increase in surface areas and the decrease in volumes of the first and second metal bearings 5 and 6, which occur when forming the ventilation grooves 26, 26 in the first and second metal bearings 5 and 6, can be avoided. Accordingly, it is possible to prevent the outflow of the lubricating oil impregnated in the first and second metal bearings 5 and 6 in a heated or hot condition, which results from an increase of a heat-generation affecting area due to the surface area increase. On the other hand, the deterioration in lubricating performance, resulting from a decrease of an absolute quantity of the impregnated lubricating oil due to the volume decrease, can be prevented.

Although the invention has been described
above by reference to certain embodiments of the invention, the invention is not limited to the embodiment described above.

In the embodiment 1, the bearing structure of the present invention is applied to the motor M. However, for instance, the bearing structure of the present invention can be applied to rotating machinery except the motor M.

Furthermore, in the embodiment 1, the permanent magnet 32 is provided on the rotor 3 side in the motor M. However, the electromagnet could be provided on the rotor 3 side in the motor M. In this case, either the electromagnet or the permanent magnet could be provided in the stator 4.

Moreover, in the embodiment 1, the bearing structure is applied to the metal bearing having the shaft-center-adjustment function achieved by the relative sliding contact between the bearing-side contact surface and the housing-side contact surface. However, the bearing structure of the present invention can be applied to a metal bearing having no shaft-center-adjustment function, such as a sleeve metal bearing.

In the embodiment 1, the metal bearing impregnated with the lubricating oil is described. However, the bearing structure of the present invention could be applied to a dry-type bearing that is not impregnated with the lubricant.

In the embodiment 1, each of the first and second housing-side contact surfaces 24 and 25 is provided with the ventilation groove 26 as the ventilation passage, namely that the total of two ventilation passages are provided in the housing 2. However, the bearing structure of the present invention is not limited to this as long as the ventilation passage bypasses at least one of the first and second metal bearings 5 and 6. For example, a structure in which only either one of the two ventilation grooves 26, 26 is formed is possible. Conversely, a plurality of the ventilation grooves 26 could be provided in each of the first and second metal bearings 5 and 6. Additionally, a position where the ventilation passage is formed is not limited as long as the ventilation passage can bypass at least one of the first and second metal bearings 5 and 6 in the housing 2. That is, the ventilation passage could be formed in a position other than on the first and second housing-side contact surfaces 24 and 25. In this case, the ventilation passage is not formed into the shape of the groove, but a small through hole is formed as the ventilation passage. For instance, the ventilation passage of the small through hole might be formed not on an inner surface of the housing 2 but in the inner surface such that the small through hole penetrates the inner surface for interconnecting the inside and outside areas of the housing 2.

The entire contents of Japanese Patent Application No. 2008-034254 filed on February 15, 2008 are incorporated herein by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A bearing structure comprising:
a housing (2) having a bore (21) that penetrates the housing (2);
a rotation shaft (1) inserted into the bore (21);
annular first and second metal bearings (5, 6) which are provided apart from each other in an axial direction in the bore (21) and rotatably support the rotation shaft (1); and
a ventilation passage (26) which is provided in the housing (2) and bypasses at least one of the first and second metal bearings (5, 6), and through which a closed area sandwiched between the both first and second metal bearings (5, 6) inside the bore (21) communicates with an outside area.

2. The bearing structure as claimed in claim 1, further comprising:
spherical-shaped housing-side contact surfaces (24, 25) formed on an inner surface of the housing (2); and
spherical-shaped bearing-side contact surfaces (52, 62) respectively formed on outer periphery surfaces of the first and second metal bearings (5, 6) for allowing a sliding contact with the housing-side contact surfaces (24, 25), and wherein
a shaft-center-adjustment function is provided through the relative sliding contact between the bearing-side contact surfaces (52, 62) and the housing-side contact surfaces (24, 25), and
the ventilation passage (26) has a groove shape, and is formed on the housing-side contact surfaces (24, 25).

3. The bearing structure as claimed in claim 1 or 2,
wherein:
the first and second metal bearings (5, 6) are impregnated with a lubricant.

4. The bearing structure as claimed in any one of the preceding claims 1 to 3, wherein:
ring-shaped movement restriction members (7, 8) which restricts movement in the axial direction, of the first and
second metal bearings (5, 6) are provided in either the housing (2) or the rotation shaft (1).

5. The bearing structure as claimed in claim 1, wherein:
the ventilation passages (26, 26) which bypass each of the first and second metal bearings (5, 6) are provided in the housing (2).

6. The bearing structure as claimed in claim 1, wherein:
the ventilation passage (26) is formed into a through hole that penetrates an inner surfaces of the housing (2), and
interconnects the inside and outside areas.
